(19) Europäisches Patentamt
European Patent Office
Office européen des brevets

(11) Veröffentlichungsnummer: **0 025 018**
**B1**

(12) # EUROPÄISCHE PATENTSCHRIFT

(45) Veröffentlichungstag der Patentschrift: **29.05.85**

(21) Anmeldenummer: **80810262.8**

(22) Anmeldetag: **22.08.80**

(51) Int. Cl.[4]: **C 08 K 5/34**, C 08 L 67/00, C 08 L 77/00, C 08 K 3/22, C 08 K 7/14

(54) **Flammwidrige Kunststofformmasse.**

(30) Priorität: **28.08.79 CH 7797/79**

(43) Veröffentlichungstag der Anmeldung: **11.03.81 Patentblatt 81/10**

(45) Bekanntmachung des Hinweises auf die Patenterteilung: **29.05.85 Patentblatt 85/22**

(84) Benannte Vertragsstaaten: **DE FR GB IT NL**

(56) Entgegenhaltungen:
**US - A - 3 624 024**
**US - A - 3 997 510**
**US - A - 4 108 841**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Buxbaum, Lothar, Dr., Haus Litzelröder, D-6145 Lindenfels/Odenwald (DE)**
Erfinder: **Habermeier, Jürgen, Dr., Alemannenweg 12, CH-4148 Pfeffingen (CH)**
Erfinder: **Breitenfellner, Franz, Dr., Im Entich 9a, D-6140 Bensheim (DE)**
Erfinder: **Kainmüller, Thomas, Dr., Am Hangweg 18, D-6145 Lindenfels/Odenwald (DE)**

EP 0 025 018 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine flammwidrige Kunststofformmasse, welche ein Polymer und ein halogeniertes Benzimidazolon als flammhemmendes Mittel enthält. Die Formmasse, welche noch weitere übliche Zusätze und Füllmittel enthalten kann, dient zur Herstellung von geformten Teilen, insbesondere durch Spritzgußverarbeitung von thermoplastischen Massen. Sie finden Verwendung in der Elektroindustrie, für den Automobilbau, für Haushaltgeräte usw.

Es ist bekannt, den Kunststoffmassen nicht reaktive monomere oder polymere flammhemmend wirkende Substanzen zuzufügen. Die Anforderungen an solche flammhemmend wirkende Stoffe sind hoch. Die Stoffe sollten farblos, leicht einmischbar, mit dem Polymer verträglich, wärme- und lichtstabil sein und sich außerdem nicht negativ auf die physikalischen Eigenschaften des Kunststoffes auswirken; sie dürfen nicht migrieren und sollen nicht toxisch sein. Stoffe, welche allen diesen Anforderungen genügen, sind nicht bekannt, insbesondere auch deshalb, weil relativ große Mengen solcher Stoffe dem Polymer zugefügt werden müssen, damit sich die flammhemmende Wirkung auf die gesamte Kunststoffmasse überträgt.

Für bestimmte thermoplastische Massen sind bereits Zusätze verwendet worden, welche für viele Zwecke zu befriedigen vermögen. Beispielsweise führt der Zusatz von Polyvinylchlorid zu Acrylnitril-Butadien-Styrol-Terpolymeren zu einem flammwidrigen Kunststoff mit hoher Schlagzähigkeit und guter Wärmeformbeständigkeit. Hingegen begrenzt die Wärmeunbeständigkeit den Gebrauch dieser Mischung für das Spritzgußverfahren.

Auch Zusätze niedermolekularer halogenierter Verbindungen cycloaliphatischer Struktur, wie die aus der US-Patentschrift 3 403 036 bekannten endocyclischen Verbindungen, haben ausgezeichnete flammhemmende Wirkung bei gleichzeitiger geringer Beeinträchtigung der physikalischen Eigenschaften des Polymers. Jedoch weisen auch sie bei der Herstellung von Kunststoffen, bei welcher hohe Temperaturen angewendet werden müssen, eine zu geringe Wärmestabilität auf.

Andere, durch hohen Halogengehalt in kleinen Mengen wirksame Produkte, wie Hexabrombenzol, Pentabromtoluol und Hexabrombiphenyl sowie das aus der britischen Patentschrift 1 298 880 bekannte Dekabrombiphenyl sind zwar genügend thermostabil, neigen aber dazu, bei hohen Temperaturen zu migrieren.

Zur Vermeidung der genannten Nachteile werden reaktive Flammschutzmittel bei der Herstellung der Polymeren in diese eingebaut. Beispielsweise sind aus der US-Patentschrift 3 997 510 flammwidrige thermoplastische Polyester aus Terephthalsäure, Isophthalsäure oder aliphatischen Dicarbonsäuren und aliphatischen Diolen bekannt, welche halogenierte Benzimidazolone einkondensiert enthalten. Dadurch kann die Beeinträchtigung der physikalischen Eigenschaften auf ein Minimum herabgesetzt werden. Die so erhaltenen Polyester weisen eine erstaunliche hohe Wärmebeständigkeit auf. Die Herstellung solcher Produkte ist jedoch aufwendig und oft mit Schwierigkeiten verbunden, indem genaue Herstellungsbedingungen eingehalten werden müssen. Ferner können gewisse Eigenschaften, wie die Kristallisationsfähigkeit, beeinträchtigt werden.

Es hat sich nun gezeigt, daß der Zusatz von halogenierten Benzimidazolonen zu Kunststofformmassen, so daß eine rein mechanische Mischung entsteht, zu Produkten führt, welche die guten Eigenschaften der Kunststoffe ohne Zusatz aufweisen und gleichzeitig flammwidrig sind.

Die Erfindung betrifft daher eine flammwidrige Kunststofformmasse, welche dadurch gekennzeichnet ist, daß sie mindestens ein Polymer und in einer Menge von 5 bis 30 Gewichtsprozent, bezogen auf das Polymer, ein halogeniertes Benzimidazolen der Formel I

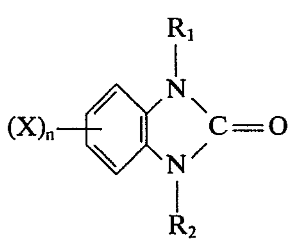

(I)

enthält, worin X Chlor und/oder Brom und n eine Zahl von 1 bis 4 bedeuten, $R_1$ sowie $R_2$ unabhängig voneinander je für

$-H$ $-CH_2OH$ $-CH_2-CH_2OH$ 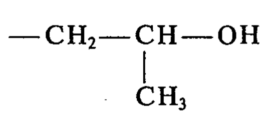 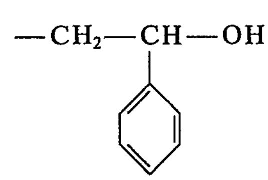

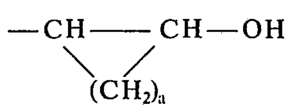 $-CH_2-CH_2-COOR_3$ $-CH_2-COOR_3$

für ein Alkalimetall oder ein Äquivalent einer Erdalkalimetall- oder Zinkverbindung stehen, a 3 oder 4 und $R_3$—H, Alkyl mit 1 bis 18 C-Atomen, ein Alkalimetall oder ein Äquivalent einer Erdalkalimetall- oder Zinkverbindung bedeuten, mit der Maßgabe, daß das Benzimidazolon der Formel I mit dem Polymer nicht chemisch reagiert.

Vorzugsweise enthält die Kunststofformmasse 10 bis 20 Gewichtsprozent einer Verbindung der Formel I, bezogen auf das Polymer. Vorzugsweise bedeutet n in der Formel I die Zahl 3 oder 4. X steht insbesondere für Brom. Bevorzugt werden Verbindungen der Formel I verwendet, in welcher $R_1$ und/oder $R_2$ Wasserstoff oder ein Äquivalent einer Calciumverbindung bedeuten.

Bevorzugt werden thermoplastische Polymere verwendet, insbesondere Polyester auf Basis aliphatischer, cycloaliphatischer und/oder aromatischer Dicarbonsäuren und ebensolcher Diole. Als technisch wichtige Gruppen von Polyestern werden besonders jene angesehen, die mindestens 25 Mol-%, vorzugsweise 40 Mol-%, Terephthalsäurereste, und mindestens 25 Mol-%, vorzugsweise 40 Mol-%, Alkylendiolreste enthalten, bezogen auf den Polyester. Die linearen oder verzweigten Alkylendiolreste können 2 bis 12, vorzugsweise 2 bis 6, C-Atome enthalten und sind besonders Äthylen- oder 1,4-Butylenglykolreste. Weitere Polyester sind z. B. in der DE-OS 2 751 969 beschrieben.

Andere verwendbare thermoplastische Kunststoffe sind beispielsweise Polymere, die sich von ungesättigten Kohlenwasserstoffen ableiten, wie Polyäthylen, Polybutadien, Polystyrol, ferner Copolymere solcher Olefine und Mischungen solcher Polymere, im weiteren halogenhaltige Kohlenwasserstoffe, wie Polychloropren, Polyvinylchlorid, dann Polymere und Copolymere, die sich von ungesättigten $\alpha,\alpha$-ungesättigten Carbonsäuren ableiten, wie Polyacrylate, Polyacrylamide, Polyacrylnitril, ABS-Harze, ferner Polyvinylalkohol, Polyacetate, Polyphenylenoxide, Polysulfone, Polycarbonate, Polyamide.

Eine Verbindung der Formel I kann auch den Ausgangsstoffen oder Vorprodukten von elastomeren oder duroplastischen Kunststoffen zugefügt werden, z. B. von Polyurethanen, Alkydharzen, Formaldehydkondensationsprodukten mit Harnstoff, Melamin oder Phenol, Epoxidharzen.

Die Verbindungen der Formel I und ihre Herstellung sind bekannt, z. B. aus der US-Patentschrift 3 954 790. Sie können dem Polymer in irgend einer geeigneten Herstellungsstufe beigefügt werden; es besteht lediglich die Bedingung, daß sie mit dem Polymer nicht chemisch reagieren. So könnten Diole der Formel I den für die Herstellung von Polyestern verwendeten Ausgangsstoffen nicht zugefügt werden, ohne daß sie einkondensiert würden. Gewöhnlich wird das flammhemmende Mittel dem fertigen Polymer durch einfaches Zusammenmischen zugefügt. Man kann dafür irgend ein geeignetes Mischgerät, z. B. einen Taumelmischer, verwenden. Elastomerem oder duroplastischem Material muß das flammhemmende Mittel vor dem Härten der Formteile zugegeben werden, da es in das fertig vernetzte Material nicht eingemischt werden kann.

Die Verbindungen der Formel I können zusammen mit synergistisch wirkenden Verbindungen der fünften Hauptgruppe des Periodensystems verwendet werden. Unter diesen sind besonders die Phosphor- und Antimonverbindungen zu nennen, z. B. Phosphate oder insbesondere Antimontrioxid. Gewöhnlich setzt man davon dem Polymeren Mengen von etwa 1 bis 20 Gewichtsprozent, bezogen auf das Polymer zu.

Im weiteren können die Kunststofformmassen andere übliche Füllstoffe, insbesondere auch verstärkende Füllmittel, enthalten, z. B. Pigmente, optische Aufheller, kristallisationsfördernde Mittel, Gleitmittel, Weichmacher usw. Als verstärkender Füllstoff werden besonders Glasfasern, z. B. in einer Menge von 5 bis 60 Gewichtsprozent, insbesondere von 10 bis 40 Gewichtsprozent, bezogen auf die Gesamtmasse, verwendet.

Die erfindungsgemäßen Kunststofformmassen sind entweder bereits geformte Stücke, z. B. wenn es sich um Duroplaste handelt, oder werden nach üblichen Methoden, wie Gießen, Spritzgießen usw., geformt.

Insbesondere eignen sich die neuen Formmassen als »Engineering-Plastic«-Materialien, die zur Herstellung von Formkörpern, wie Zahnräder, Behältern für Chemikalien oder Lebensmittel, Maschinenteilen und Apparateteilen, Filmen, Folien, Platten und auch zur Herstellung von Halbzeugen, welche spanabhebend verformt werden können, geeignet sind. Ferner eignen sie sich zur Beschichtung von Gegenständen, z. B. nach den bekannten Pulverbeschichtungsverfahren.

## Beispiel 1

### Polybutylenterephthalat + 4,5,6,7-Tetrabrom-benzimidazolon

a) Herstellung von Polybutylenterephthalat (PBT):
In einem 10-l-Reaktor mit Rührer, Stickstoffeinlaß und Trennkolonne werden 3000 g Dimethylterephthalat, 2800 g Butandiol-1,4 und 1,78 g Titantetraisopropylat eingefüllt. Unter Rühren und Stickstoffdurchleiten werden innerhalb von 4,5 Stunden 98,5% der theoretischen Menge Methanol abdestilliert, wobei die Temperatur des Reaktionsgemisches auf 200°C steigt. Das Gemisch wird dann in einen zweiten Reaktor übergeführt. Innerhalb von 1,5 Stunden wird ein Vakuum von 0,5 Torr angelegt und gleichzeitig die Reaktionstemperatur auf 250°C gesteigert. Nach weiteren 3

Stunden wird die Reaktion beendet, die Schmelze durch Düsen zu Strängen ausgepreßt, die Stränge in Wasser von 18°C abgeschreckt und zu einem farblosen zylindrischen Granulat von 2 mal 3 mm zerkleinert, das eine relative Viskosität von 2,13 aufweist.

b) Herstellung von 4,5,6,7-Tetrabrom-benzimidazolon (A):
In einem 6 l-Sulfierkolben werden 13,41 g Benzimidazolen in 4 l Eisessig und 1 l Wasser bei Raumtemperatur suspendiert. Dann werden 479 g Brom zugetropft, wobei die Innentemperatur bis etwa 40°C ansteigt. Nach Beendigung des Zutropfens wird die Innentemperatur innerhalb von etwa 2 Stunden auf 110°C (Rückfluß) gebracht. Nach weiteren 5 h Rühren bei Rückflußtemperatur wird das Reaktionsgemisch über Nacht langsam unter Rühren abgekühlt. Das feste Reaktionsprodukt wird abgenutscht und mit Wasser gewaschen. Das Reaktionsprodukt kann aus Tetrahydrofuran umkristallisiert werden. Der Schmelzpunkt liegt über 300°C.

c) 55 Gewichtsteile PBT werden in einem Taumelmischer mit

10 Gewichtsteilen A,
30 Gewichtsteilen Glasfasern (der Owens Corning, Typ OCF CS 429 YZ) und
5 Gewichtsteilen $Sb_2O_3$

trocken gemischt und anschließend bei Temperaturen von 240°C mit Hilfe eines Extruders granuliert.

Nach dem Trocknen während 10 Stunden bei 100°C wird das Granulat zu Prüfkörpern spritzgegossen, wobei die Temperatur von 220°C in der Eingangszone bis 260°C in der Ausgangszone ansteigt.

Die Prüfkörper werden dann gemäß ASTM 2863 auf ihre Brennbarkeit geprüft. Für den Limiting Oxygen Index (LOI) wird der Wert von 34 erhalten.

d) Vergleichsversuch:
Eine Mischung auf 57 Gewichtsteilen PBT, 8 Gewichtsteilen Dekabromdiphenyl, 5 Gewichtsteilen $Sb_2O_3$ und 30 Gewichtsteilen Glasfasern wird wie unter c) beschrieben verarbeitet und geprüft. Der Prüfkörper, dessen Bromgehalt gleich hoch wie in der erfindungsgemäßen Kunststoffmasse ist, weist einen LOI von 31 auf.

## Beispiel 2

### Polyamid 6 + 4,5,6,7-tetrabrom-benzimidazolon

a) Herstellung von Polyamid 6: Sie erfolgt nach bekannten Methoden aus Caprolactam.
b) Herstellung von 4,5,6,7-Tetrabrom-benzimidazolon: Vgl. Beispiel 1 und b).
c) Man geht in gleicher Weise vor, wie unter 1c) beschrieben ist. Die Temperatur in der Spritzgußmaschine beträgt 240 bis 250°C. Der LOI beträgt 28.

## Beispiel 3

### Polyamid-6 + N,N'-Di-(2-hydroxyäthyl)-4,5,6,7-tetrabrombenzimidazolon

a) Herstellung von Polyamid 6: in bekannter Weise.
b) Herstellung von N,N'-Di-(2-hydroxyäthyl)-4,5,6,7-tetrabrombenzimidazolon: Die Verbindung wird in der US-Patentschrift 3 954 790, Beispiel 1, beschrieben hergestellt.
c) Das weitere Vorgehen erfolgt analog wie unter 2c) beschrieben.

Es wird ein LOI von 26 gemessen.

## Beispiel 4

### Polypropylen + N,N'-Di-(2-hydroxyäthyl)-4,5,6,7-tetrabrombenzimidazolon

a) Herstellung von Polypropylen: in üblicher Weise wird ein ataktisches Polymerisat hergestellt.
b) N,N'-Di-(2-hydroxyäthyl)-4,5,6,7-tetrabrom-benzimidazolon wird wie unter 3b) beschrieben hergestellt.
c) Man geht wie unter 1c) beschrieben vor, wobei die Temperatur in der Spritzgußmaschine 210 bis 230°C beträgt.

Als LOI wird 21 gemessen.

Beispiel 5

Polybutylenterephthalat + 4,5,6,7-Tetrabrombenzimidazoloncalcium

a) Herstellung von PBT: vgl. 1a)

b) Herstellung von 4,5,6,7-Tetrabrom-benzimidazoloncalcium
270 g Tetrabrombenzimidazolon (0,6 Mol) und 48 g NaOH (1,2 Mol) werden in 1000 ml Wasser auf Rückfluß erhitzt. Zur entstandenen Lösung werden unter kräftigem Rühren 131,4 g Calciumchloridhexahydrat (0,6 Mol) gelöst in 500 ml heißem Wasser (90° C) gegeben. Nach dem Abkühlen auf Raumtemperatur wird das ausgefallene Reaktionsprodukt abgesaugt, mit 500 ml Wasser und 500 ml heißem Tetrahydrofuran gewaschen und 5 h bei 150° C/l mbar getrocknet. Man erhält 272 g farbloses kristallines Produkt, das bis 320° C nicht schmilzt.

Elementaranalyse:
$Ca_{ber}$: (für $C_7Br_4CaN_2O$): 8,2%
$Ca_{gef}$: 7,8%

c) 82 Gewichtsteile PBT werden mit 10 Gewichtsteilen der Calciumverbindung b) und 8 Gewichtsteilen $Sb_2O_3$ gemischt. Die Mischung wird hierauf in gleicher Weise wie unter 1a) beschrieben verarbeitet. Das erhaltene Produkt weist einen LOI von 32 auf.

## Patentansprüche

1. Flammwidrige Kunststofformmasse, dadurch gekennzeichnet, daß sie mindestens ein Polymer und in einer Menge von 5 bis 30 Gewichtsprozent, bezogen auf das Polymer, ein halogeniertes Benzimidazolon der Formel I

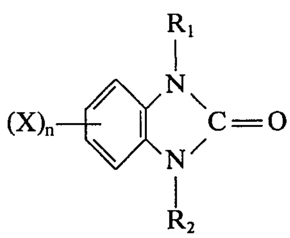

(I)

enthält, worin X Chlor und/oder Brom und n eine Zahl von 1 bis 4 bedeuten, $R_1$ sowie $R_2$ unabhängig voneinander je für

$-H$ $-CH_2OH$ $-CH_2-CH_2OH$ 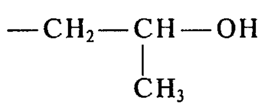 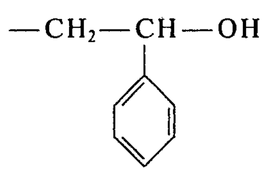

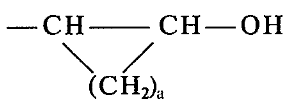 $-CH_2-CH_2-COOR_3$ $-CH_2-COOR_3$

für ein Alkalimetall oder ein Äquivalent einer Erdalkalimetall- oder Zinkverbindung stehen, a 3 oder 4 und $R_3$ —H, Alkyl mit 1 bis 18 C-Atomen, ein Alkalimetall oder ein Äquivalent einer Erdalkalimetall- oder Zinkverbindung bedeuten, mit der Maßgabe, daß das Benzimidazolon der Formel I mit dem Polymer nicht chemisch reagiert.

2. Kunststofformmasse gemäß Anspruch 1, dadurch gekennzeichnet, daß sie als Polymer ein thermoplastisches Material enthält.

3. Kunststofformmasse gemäß Anspruch 2, dadurch gekennzeichnet, daß sie als thermoplastisches Material einen Polyester auf der Basis einer aliphatischen, cycloaliphatischen und/oder aromatischen Dicarbonsäure und eines aliphatischen, cycloaliphatischen und/oder aromatischen Diols enthält.

4. Kunststofformmasse gemäß Anspruch 3, dadurch gekennzeichnet, daß der Polyester mindestens 25 Mol-% Terephthalsäurereste und mindestens 25 Mol-% Alkylendiolreste mit 2 bis 12 C-Atomen, bezogen auf den Polyester, enthält.

5. Kunststofformmasse gemäß Anspruch 2, dadurch gekennzeichnet, daß sie als thermoplastisches Material ein Polyamid enthält.

6. Kunststofformmasse gemäß Anspruch 1, dadurch gekennzeichnet, daß n in der Formel I 3 oder 4 bedeutet.

7. Kunststofformmasse gemäß Anspruch 6, dadurch gekennzeichnet, daß X in der Formel I Brom bedeutet.

8. Kunststofformmasse gemäß Anspruch 1, dadurch gekennzeichnet, daß $R_1$ und/oder $R_2$ in der Formel I Wasserstoff oder ein Äquivalent einer Calciumverbindung bedeuten.

9. Kunststofformmasse gemäß Anspruch 1, dadurch gekennzeichnet, daß sie, bezogen auf das Polymer, 1 bis 20 Gewichtsprozent $Sb_2O_3$ enthält.

10. Kunststofformmasse gemäß Anspruch 1, dadurch gekennzeichnet, daß sie, bezogen auf die Gesamtmasse 10 bis 40 Gewichtsprozent Glasfasern enthält.

**Claims**

1. A flame-resistent plastics moulding material which contains at least one polymer and, in an amount of 5 to 30 per cent by weight, based on the polymer, a halogenated benzimidazolone of the formula I

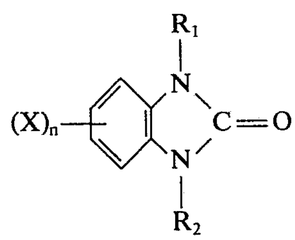

(I)

wherein X is chlorine and/or bromine, n is a value from 1 to 4, and each of $R_1$ and $R_2$ independently of the other is

$-H$ $-CH_2OH$ $-CH_2-CH_2OH$ 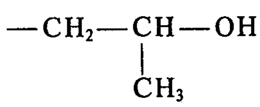 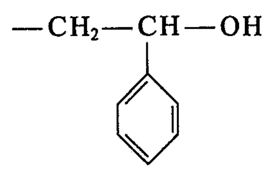

or

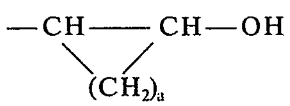

in which a is 3 or 4; or each of $R_1$ and $R_2$ independently of the other is $CH_2-CH_2-COOR_3$ or $-CH_2-COOR_3$, in which $R_3$ is H, alkyl having 1 to 18 carbon atoms, an alkali metal or an equivalent of an alkaline earth metal or zinc compound; or each of $R_1$ and $R_2$ independently of the other is an alkali metal or an equivalent of an alkaline earth metal or zinc compound, with the proviso that the benzimidazolone of the formula I does not react chemically with the polymer.

2. A plastics moulding material according to claim 1, wherein the polymer is a thermoplastic material.

3. A plastics moulding material according to claim 2, wherein the thermoplastic material is a polyester based on an aliphatic, cycloaliphatic and/or aromatic dicarboxylic acid and an aliphatic, cycloaliphatic and/or aromatic diol.

4. A plastics moulding material according to claim 3, wherein the polyester contains at least 25 mol-% of terephthalic acid radicals and at least 25 mol-% of alkylenediol radicals having 2 to 12 carbon atoms, based on the polyester.

5. A plastics moulding material according to claim 2, wherein the thermoplastic material is a polyamide.

6. A plastics moulding material according to claim 1, wherein n in the formula I is 3 or 4.

7. A plastics moulding material according to claim 6, wherein X in the formula I is bromine.

8. A plastics moulding material according to claim 1, wherein $R_1$ and/or $R_2$ in the formula I are hydrogen or an equivalent of a calcium compound.

9. A plastics moulding material according to claim 1, which contains 1 to 20 per by weight of $Sb_2O_3$, based on the polymer.

10. A plastics moulding material according to claim 1, which contains 10 to 40 per cent by weight of glass fibres, based on the total material.

**Revendications**

1. Matière à mouler synthétique résistant à la flamme, caractérisée en ce qu'elle contient au moins un polymère et, en une quantité de 5 à 30% en poids par rapport au polymère, une benzimidazolone halogénée répondant à la formule I:

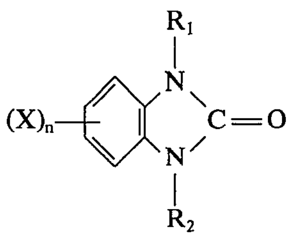

(I)

dans laquelle X représente le chlore et/ou le brome, n représente un nombre de 1 à 4, $R_1$ et $R_2$ représentent chacun, indépendamment l'un de l'autre,

$-H$ $-CH_2OH$ $-CH_2-CH_2OH$ 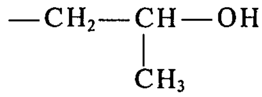 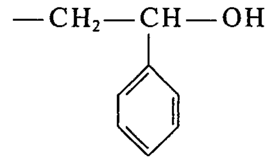

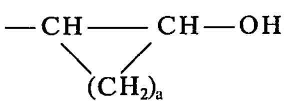 $-CH_2-CH_2-COOR_3$ $-CH_2-COOR_3$

un métal alcalin ou un équivalent d'un composé d'un métal alcalino terreux ou du zinc, a est égal à 3 ou à 4 et $R_3$ représente H, un alkyle en $C_1-C_{18}$, un métal alcalin ou un équivalent d'un composé d'un métal alcalinoterreux ou du zinc, cette benzimidazolone de formule I ne devant pas réagir chimiquement avec le polymère.

2. Matière à mouler synthétique selon la revendication 1, caractérisée en ce qu'elle contient, comme polymère, une matière thermoplastique.

3. Matière à mouler synthétique selon la revendication 2, caractérisée en ce qu'elle contient, comme matière thermoplastique, un polyester à base, d'une part, d'un acide dicarboxylique aliphatique, cycloaliphatique et/ou aromatique et, d'autre part, d'un diol aliphatique, cycloaliphatique et/ou aromatique.

4. Matière à mouler synthétique selon la revendication 3, caractérisée en ce que le polyester contient au moins 25% en moles de radicaux d'acide téréphtalique et au moins 25% en moles de radicaux d'alcane-diols contenant de 2 à 12 atomes de carbone, par rapport au polyester.

5. Matière à mouler synthétique selon la revendication 2, caractérisée en ce qu'elle contient, comme matière thermoplastique, un polyamide.

6. Matière à mouler synthétique selon la revendication 1, caractérisé en ce que n, dans la formule I, est égal à 3 ou à 4.

7. Matière à mouler synthétique selon la revendication 6, caractérisée en ce que X, dans la formule I, représente le brome.

8. Matière à mouler synthétique selon la revendication 1, caractérisée en ce que $R_1$ et/ou $R_2$, dans la formule I, représentent l'hydrogène ou un équivalent d'un composé du calcium.

9. Matière à mouler synthétique selon la revendication 1, caractérisée en ce qu'elle contient, par rapport au polymère, de 1 à 20% en poids de $Sb_2O_3$.

10. Matière à mouler synthétique selon la revendication 1, caractérisée en ce qu'elle contient, par rapport à la matière totale, de 10 à 40% en poids de fibres de verre.